# EUROPEAN PATENT APPLICATION

(11) **EP 2 778 491 A1**
(43) Date of publication of application: **17.09.2014**
(21) Application number: 13166813.9
(22) Date of filing: 07.05.2013
(51) Int. Cl.: F16L 11/06, F16L 11/12, F15D 1/02

(54) **Water hose**

(30) Priority: 13.03.2013 EP 13158997
(71) Applicant: Actervis Gmbh, 6341 Baar (CH)
(72) Inventor: Torres Martin, D. Juan Ramon, 08290 Cerdanyola del Valles (ES)
(74) Representative: Hohgardt, Martin

(57) **Abstract**

A water hose (1) is described, the water hose (1) comprising a first tube (2), made from an elastic material, wherein the first tube (2) is adapted to elongate longitudinal and laterally when pressurized and contract when not pressurized, a second tube (3), made from a substantially non-elastic but flexible material, wherein the first tube (2) is located inside the second tube (3) and the first tube (2) is attached to the second tube (3) at the distal ends of the second tube (3), the first tube (2) and the second tube (3) are attached to one another at at least one further position, wherein the attachment (4) restricts a lateral elongation of the first tube (2) at the attachment (4) to maintain pressure inside the first tube (2). Further, also a method for using the self-elongating water hose (1) is described.

## Description

The present invention relates to a self-elongating water hose. More specifically, the invention relates to a self-elongating water hose to be used outdoors, for example in the garden or in the driveway for washing cars.

Hoses for different purposes are long known in the industrial as well as in the private sector. In the private sector, they are most often used in the garden to water plants or washing the car outdoors in the driveway.

Commonly, hoses are made from rubber or other resilient flexible materials and have the purpose to guide a fluid, mostly water, from one place to another. Thereby, the resilient flexible materials allow the hoses to be durable. However, using resilient flexible materials also make it difficult to store the hoses, in particular in a compact format in a limited space. Because of this, the manufactures often try to find a compromise between durability and flexibility. However, if the hoses are made from too thin materials and do not possess a certain degree of inflexibility, they tend to kink quite a lot and are also vulnerable to be punctured. Vice versa, if they are made from a thick material and are therefore durable, they are quite cumbersome to store.

A first approach to overcome the aforementioned problems is shown in US 6,209,800, which describes a garden watering system including an elongated flexible tube formed in extendable and contractible helical coils having opposed ends. The coiled tube permits a wide range of extension of the watering system during use. However, even so the described watering system uses up less space as commonly known hoses, the hose may still be quite cumbersome to handle.

US 3,861,424 describes a flexible hose, which contracts on itself when not pressurized, so it uses less space during storing. Thereby, the described flexible hose comprises a thin tubing and spiral reinforcement means. The thin tubing is tapered in its thickness in the longitudinal direction between two adjacent spiral turns of the reinforcement means so that the tubing may bend inwardly and form pleats, which pleats incline toward the axis of the hose and advance along the inner surface of the reinforcement means in its contracted form. Hence, the described hose is easy to store when not in use and is also quite easy to handle. However, the described flexible hose has the disadvantage that when it is dragged through the garden or over the driveway, dirt may come in between the spirals and may damage the thin tubing. If the tubing is reinforced to avoid this from happening, then the hose is not flexible anymore and it will lose its aforementioned advantages.

Therefore, it is the object of the present invention to provide a water hose, which does not exhibit the aforementioned disadvantages. Hence, a water hose, which is durable, but at the same time can be stored away in limited spaces.

This object is solved by a water hose according to independent claim 1 of the current invention as well as according to the method of independent claim 15.

Thereby, a water hose according to the invention comprises a first tube, made from an elastic material, wherein the first tube is adapted to elongate longitudinal and laterally when pressurized and contract when not pressurized. An elastic material is a material which allows longitudinal and lateral elongation due to the properties of the material. Hence, the first tube is not fixed in length and diameter. The longitudinal elongation of the first tube is defined by the expansion of length of the first tube from a first length to a second length, wherein the second length is longer than the first length. Furthermore, the lateral elongation is defined by the expansion of diameter of the first tube from a first diameter to a second diameter, wherein the second diameter is larger than the first diameter. The expansions of length and diameter of the first tube are caused by pressurizing the first tube, i.e. increasing the pressure inside the first tube. For example, the first tube may have its first length and first diameter, when no water is introduced into the tube and may have its second length and diameter, when water is introduced into the first tube. Introducing water into the first tube increases the pressure inside the first tube, which in turn exerts a force onto the inner surface of the first tube. If the force exerted by the pressure is high enough to overcome the reset force of the elastic material from which the first tube is made, the first tube will expand in length and diameter. Further, the water hose according to the invention comprises a second tube, made from a substantially non-elastic but flexible material, wherein the first tube is located inside the second tube. A substantially non-elastic material is a material which restricts elongation due to the properties of the material. Hence, the second tube has a substantially fixed length and diameter. A flexible material is a material which allows deformations, for example, it can wrinkle or deflate. Due to the differences in material of the first tube and the second tube and due to the first tube being located inside the second tube, when the first tube is pressurized and expands in diameter, then this expansion is limited by the substantially fixed diameter of the second tube, due to it being made out of a substantially non-elastic material. Furthermore, the first tube is attached to the second tube at the distal ends of the second tube. Hence, when the first tube is pressurized and expands in length, then this expansion is also limited by the fixed length of the second tube, due to it being made out of a substantially non-elastic material. When the first tube is de-pressurized, then the first tube contracts back to its first diameter and first length and due to the fact that it is attached to the distal ends of the second tube, also the second tube contracts, such that the overall length of the water hose is reduced to the first length of the first tube. Pressure inside the first hose can thereby be built up, for example, by blocking one end and connecting the other end to a pressurized water source. However, during normal use water is not only introduced into the water hose, but at the same time also drained from it. In order to ensure that also in this case the first tube remains pressurized, hence elongated longitudinal as well as lateral, the first tube is not only attached to the second tube at the distal ends of the second tube, but they are also attached to one another at at least one further position, wherein the attachment restricts a lateral elongation of the first tube at the attachment to maintain pressure inside the first tube. Hence, the attachment to the second tube at the at least one further position other than the distal ends, prevents the first tube to expand in diameter at this further position, which then presents a barrier for the introduced water, which in turn leads to a ram pressure built up, such that at the remaining positions, where the first tube and the second tube are unattached, the pressure is high enough to elongate the first tube longitudinal as well as laterally, even if water is flowing through it. Thereby, the limitation in lateral elongation can thereby be chosen to cause a built up in ram pressure inside the first tube, which is high enough to overcome the reset force of the material from which the first tube is made. Once the first tube is de-pressurized, for example, by disconnecting it from the pressurized water source, the first tube will contract, that means will shrink in diameter and length and will return to its unexpanded length and diameter. Due to the attachment of the first tube to the second tube at the distal ends of the second tube, also the second tube will shrink in length, which allows the water hose to be stored away in a limited space.

The solution as provided by the water hose according to the invention has the advantage that the water hose is durable, due to the second tube providing an outer durable shell for the inner tube. Furthermore, due to the fact that the water hose contracts on itself when not in use - when not pressurized -, it can easily be stored away. Furthermore, due to the increase in pressure inside the hose due to the attachment of the first tube to the second tube at a further position different from the distal ends, the pressure will always be sufficient inside the first tube to elongate the first tube longitudinal as well as laterally, such that it always will remain in the elongated state, even if water is flowing through it or the water from the pressurized water source may have an insufficient pressure, e.g. when a simple garden pump is used. The maintenance of a certain pressure inside the first tube also has the advantage that the water hose according to the invention is less likely to kink.

In one preferred aspect of the invention, the water hose comprises also a female or male coupler connected to one distal end of the first tube, wherein the coupler is adapted to fluidly couple the first tube to a pressurized water source. The other distal end of the fist tube may be connected to a respective other male or female coupler. Thereby, the couplers may be commonly known couplers as used for common gardening hoses, and may be capable of being connected to other garden appliances, for example a sprinkler nozzle or to a car wash brush. The couplers may be glued to the distal ends, for example being glued to the outer surface of the second tube attaching the second tube to the first tube by ease of the couplers. Alternatively or additionally, the couplers may be secured by ease of a thread or click fitted onto the distal ends. However, also other means for securing the couplers to the distal ends are contemplated by a person skilled in the art.

In yet another aspect, the other coupler not attached to the pressurized water source may comprise a water stopper for retaining the water inside the first tube until the water stopper is released. This may be advantageously, when the water hose at one side is already connected to a pressurized water source, but the other end is not connected. In this case in order to avoid water leakage, the water stopper may be employed. The water stopper may thereby either be manually released and may have the form of a valve, or it may be automatically released when an appliances is connected to the coupler. Furthermore, the water stopper may not release until a predefined pressure is built up in the first tube and the first tube has elongated, this supports the increase of pressure inside the first tube and ensures additionally that the first tube is always fully elongated longitudinal as well as laterally. For this purpose, the water stopper may comprise a pressure actuated valve, which only releases if the pressure inside the first tube is high enough.

In yet another aspect, the first tube is made out of rubber, hence an elastomer type polymer, where the polymer has the ability to return to its original shape after being stretched - elongated / expanded - or in any other way or form being deformed. This rubber material allows the first tube to elongate longitudinal as well as laterally, but at the same time provides quite a durability and heat resistance. Furthermore, the choice of the material of the first tube defines the longitudinal and lateral elongation of the first tube. Preferably, a material is used, which allows the first tube to elongate longitudinal at least three times its length, when pressurized. However, also other ratios and materials may be contemplated by a person skilled in the art.

In another aspect, the non-elastic but flexible material of the second tube is a woven material, substantially not elastic longitudinal and laterally. A woven material, for example made from polyester or nylon, has the advantage that it is flexible, but at the same time is also very durable and substantially fixed in diameter and length once produced. Hence, the second tube not only provides a limiting functionality for the first tube with regards to its longitudinal and lateral elongation when pressurized, but also provides a durable outer shell for the first tube. The second tube and the material used can thereby be adapted to withstand the environmental conditions the water hose is going to be used in. For example, in case the water hose is more frequently used for washing cars, then the second tube should be made from a material which can withstand the water hose being dragged over the hard driveway, whereas when the hose is often used in the garden, it may be preferred that the material is easy to clean, for example when the hose is dragged through a garden patch. For the substantially fixed diameter and the substantially fixed length of the second tube, it has to be taken care of that the length of the second tube is less or equal to the maximum length the first tube can expand to and that the diameter of the second tube is less or equal to the maximum diameter the first tube can expand to, since otherwise rupturing of the first tube may be immanent. The characteristics of the second tube with regards to its substantially fixed diameter and the substantially fixed length define therefore the maximum elongation characteristics of the first tube with regards to its longitudinal as well as lateral elongation. Furthermore, since the first tube is located inside the second tube and can move freely relative to the second tube inside the second tube, the inner surface of the second tube may be coated with a material which reduces friction between them and may reduce any shear which may be experienced, when the first tube expands.

In another aspect, the water hose further comprises a circumferential limiter at the at least one further position where the first tube is attached to the second tube, the circumferential limiter may be positioned at the outer surface of the second tube to limit any lateral elongation of the first and/or second tube. The circumferential limiter may thereby be glued to the outer surface of the second tube. The circumferential limiter has the advantage that it on the one hand fixates the position of the attachment of the first tube and the second tube, and that at the same time it presents a counter bearing for the force exerted upon the attachment from inside the first tube. Due to the fact that the lateral elongation of the first tube is limited at the attachment, high forces will be exerted circumferentially from inside the first tube. The circumferential limiter provides a counter bearing for these forces. Thereby, the circumferential limiter may preferably be made out of metal, but may also be made out of plastic or other kinds of different material, which may be contemplated to be feasible by a person skilled in the art to withstand the forces exerted upon.

In another aspect, the attachment may be constituted by a cylindrical circumferential limiter arranged in between the first tube and the second tube. Thereby, the cylindrical circumferential limiter is arranged inside the second tube and the first tube extends through the cylindrical circumferential limiter. Thereby, in order to fixate the position of the cylindrical circumferential limiter relatively to the two tubes, the inner surface of the cylindrical circumferential limiter may be attached to the outer surface of the first tube and the outer surface of the cylindrical circumferential limiter may be attached to the inner surface of the second tube. These attachments may be constituted by gluing the cylindrical circumferential limiter to the outer surface of the first tube and also gluing the cylindrical circumferential limiter to the inner surface of the second tube. The first tube and the cylindrical circumferential limiter may additionally also be attached to one another by mechanical means, which prevent a relative motion of the first tube and the cylindrical circumferential limiter. For example, the first tube may at the position of the cylindrical circumferential limiter comprise one or several protrusions, which may grip into corresponding recesses in the cylindrical circumferential limiter. Additionally or alternatively, protrusions may be located in front and behind the cylindrical circumferential limiter to prevent the cylindrical circumferential limiter to move relatively to the first tube. However, the first tube and the cylindrical circumferential limiter may also additionally or alternatively be heat welded or melted together, in order to prevent relative motion. The second tube and the cylindrical circumferential limiter may additionally or alternatively also be heat welded or melted together. For example, the second tube may be made out of a nylon material and the cylindrical circumferential limiter may be made out of a plastic material, when heat is applied to the contact area of the cylindrical circumferential limiter and the second tube, the materials melt together and form a fixed bond. In order to support this bonding, there may also be arranged one or several protrusions on the outer surface of the cylindrical circumferential limiter, which may be suitable to interact with the inner surface of the second tube, in order to strengthen the bond between them. For example, these protrusions may be made out of a material, which has a different melting point as the rest of the material of the cylindrical circumferential limiter in order to interact with the second tube, when heat is applied. Thereby, the protrusions may have a lower melting point as the rest of the material of the cylindrical circumferential limiter, such that when heat is applied, the protrusions melt at first and bond with the material of the second tube. However, the protrusions may also have a higher melting point as the rest of the material of the cylindrical circumferential limiter, such that when heat is applied, the protrusions can grip into the material of the second tube and thereby fixate the cylindrical circumferential limiter to the second tube. Also it may be that the protrusions represent barbed hooks, which can grip into the material of the second tube and thereby additionally secure the bond. However, also other means or methods are contemplated, in order to secure the cylindrical circumferential limiter to the first tube and the second tube in order to prevent relative motion. Hence, the cylindrical circumferential limiter presents an attachment of the first tube to the second tube, wherein the attachment restricts a lateral elongation of the first tube at the attachment to maintain pressure inside the first tube. The cylindrical circumferential limiter may thereby preferably be made out of a material, which substantially does not elongate laterally, when the first tube is pressurized. Thereby, the inner diameter of the cylindrical circumferential limiter corresponds to a diameter to which the first tube has to be restricted to built up a sufficient high ram pressure inside the first tube to maintain elongation of the first tube, even if water is drained from one end of the first tube. The outer diameter of the cylindrical circumferential limiter preferably corresponds to the inner diameter of the second tube, such that the cylindrical circumferential limiter fills up the space between the first tube and the second tube. Thereby, the cylindrical circumferential limiter can be made out of plastic or any other suitable material, which is strong enough not to or at least substantially not to elongate laterally when the first tube is pressurized. However, also other materials are contemplated, which fulfill this criterion.

In yet another aspect, the first tube is glued to the second tube at the attachment. Thereby, the glue used may be incompressible, when hardened. For example, an epoxy resin may be used. This allows the attachment to firmly ensure the restriction of the lateral elongation of the first tube at the attachment. Thereby, the glue may fill out a space between the first tube and the second tube, wherein the space may be defined longitudinal by a predefined length and may be laterally defined by the difference in diameter to which the first tube shall be limited and the substantially fixed diameter of the second tube. The longitudinal extension of the attachment may be at least several centimeters. However also other attachment techniques may be contemplated, for example, the first tube may be attached to the second tube by means of heat welds, or other feasible techniques as contemplated by a person skilled in the art and which are regarded to be feasible to provide a limitation of lateral elongation of the first tube.

In yet another aspect, the attachment of the first tube to the second tube is located at a distance from one of the distal ends, which is less than a quarter of the total length of the first tube in the elongated state away from one of the distal ends. This allows that enough pressure is built up in the remaining part of the water hose to longitudinal elongate the first tube, even if water is flowing through the hose or the water source does not supply high enough pressure. Furthermore, by having the attachment close to one distal end, it can be ensured that most of the water hose is fully elongated the whole time, even if water is flowing through the water hose.

The method according to the invention for automatically elongating a water hose which comprises a first tube, made from an elastic material, wherein the first tube is adapted to elongate longitudinal and laterally when pressurized and contract when not pressurized, a second tube, made from a substantially non-elastic but flexible material, wherein the first tube is located inside the second tube and the first tube is attached to the second tube at the distal ends of the second tube, wherein the first tube and the second tube are attached to one another at at least one further position, wherein the attachment restricts a lateral elongation of the first tube at the attachment to maintain pressure inside the first tube, the method comprising connecting one distal end of the first tube to a pressurized water source, block the other distal end of the first tube and fill the first tube with water.

The above features and advantages of the present invention will become apparent from the following detailed description when taken with the accompanying drawings in which
- FIG 1: shows a schematic of an embodiment example of the water hose according to the present invention in the contracted state;
- FIG 2: shows a partially transparent schematic of the embodiment example of the water hose according to the present invention as shown in figure 1 in the elongated state; and
- FIG 3: shows a partially transparent schematic of another embodiment example of the water hose according to the present invention in the elongated state, with a cylindrical circumferential limiter inserted in between the first tube and the second tube.

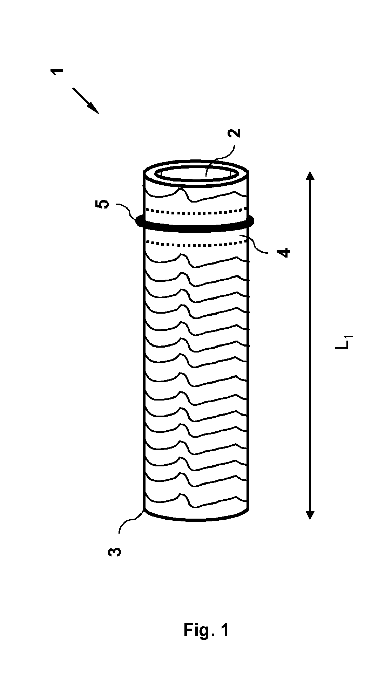

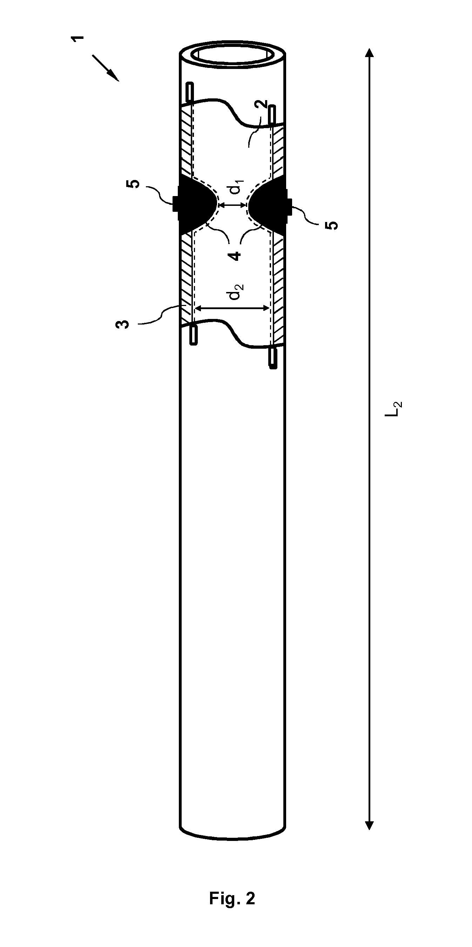

Figure 1 shows an embodiment example of a water hose 1 according to the invention in the contracted state. Thereby, a first tube 2 is located inside a second tube 3. The first tube 2 is made out of an elastic material, which in the not pressurized state has a first length, which equates in the shown embodiment example to L₁. The first and the second tubes 2, 3 are attached at their distal ends, which causes the second tube 3 to contact too, such that the second tube 3 also has an overall length of L₁. Since L₁ is shorter than the overall length of the second tube 3 when fully extended, the material of the second tube 3 wrinkles, due to the fact that it is made out of non-elastic but flexible material. Further, in the embodiment example as shown in figure 1, the first tube 2 is attached to the second tube 3 at at least one further position along the length L₁, this attachment 4 and its lengthwise extension is indicated by the space between the two dotted black lines. The attachment 4 restricts the lateral elongation of the first tube 2 within the second tube 3 - as shown in figure 2. At the remaining positions the first and second tubes 2, 3 are unattached and can move freely relatively to each other. Furthermore, a circumferential limiter 5 is shown in figure 1, which is located on the outer surface of the second tube 3 and is positioned just above the attachment 4, such that it can provide a counter bearing for the forces exerted upon the attachment 4 from within the first tube 2. Thereby, this circumferential limiter 5 can be made out of metal or plastic and can for example be glued to the outer surface of the second tube 3.

The first tube 2 may be pressurized by blocking one end of the first tube 2, for example by means of connecting it to a coupler which includes a water stopper functionality and connecting the other end to a pressurized water source, for example connecting it to a water tab, for example by means of a further coupler. When water is then filled into the first tube 2, a pressure will built up in the first tube 2. This causes the first tube 2 to expand in diameter as well as in length. Since the first tube 2 is connected to the distal ends of the second tube 3, the lengthwise expansion of the first tube 2, will also be undertaken by the second tube 3, which means the wrinkles in the material of the second tube 3 will flatten and the water hose 1 will expand in length from L₁ in the contracted state to L₂ in the elongated state (shown in figure 2). Thereby, the lengthwise expansion of the first tube 2 is limited by the substantially fixed length of the second tube 3. The diameterwise expansion of the first tube 2 is thereby limited by the substantially fixed diameter of the second tube 3. The pressure inside the first tube 2 would decrease, when the blocked end of the first tube 2 would be opened and water would be drained from the first tube 2. A decrease in pressure would however also mean that the first tube 2 would contract again. In order to avoid this shrinking - diameterwise and lengthwise -, when water is drained from one end, the attachment 4 is used as can be seen in figure 2.

Figure 2 shows a partially transparent schematic of the embodiment example of the water hose 1 as shown in figure 1, but in the elongated state. Thereby, the part which is shown partially transparent discloses the inside of the second tube 3 at the attachment 4. In the elongated state, the first tube 2 has expanded in length to L₂, due to it being pressurized. Due to the attachment of the first tube 2 to the second tube 3 at their distal ends also the wrinkles in the second tube 3 have flattened and the water hose 1 has expanded to its full length L₂, which is predefined by the substantially fixed length of the second tube 3, since the material chosen for the second tube 3 is preferably substantially not expandable in length, hence does not elongate longitudinal. As can be seen from figure 2, the attachment 4 of the first tube 2 to the second tube 3 limits the lateral elongation of the first tube 2 to a diameter d₁ at the attachment 4. This is achieved for example by introducing glue in between the first tube 2 and the second tube 3, which is indicated by the black hemispherical areas, the predefined diameter d₁ is needed to maintain a pressure inside the first tube 2, even if water is drained from one end - here the upper end. Due to the attachment 4, which limits the lateral elongation of the first tube 2 at the position of the attachment 4, a ram pressure is built up inside the remaining first tube 2, when it is connected to a pressurized water source at the one end and water is drained from the other. This ram pressure causes the first tube 2 to dilate to diameter d₂ and at the same time also causes the first tube 2 to elongate longitudinal to length L₂. It is preferred that the attachment 4 is positioned close to the end from which the water is drained, such that in front of the attachment 4 - here the lower part - enough pressure can be built up to expand the first tube 2, but still is far enough away from the end from which water is drained not to make it un-flexible.

Due to the diameter restriction to d₁ at the attachment 4, a force will be exerted upon the attachment 4 from within the first tube 2. In order to counter bear this, the second tube 3 in the here shown embodiment example also encompasses a circumferential limiter 5, which is positioned at the outer surface of the second tube 3, surrounding the attachment 4 or at least a part of the lengthwise extension of the attachment 4. This circumferential limiter 5 restricts also the lateral elongation of the second tube 3 at the attachment 4, which may additionally be necessary, when the forces are too high, such that also the substantially non-elastic material of the second tube 3 would laterally elongate under the forces exerted upon from within the first tube 2.

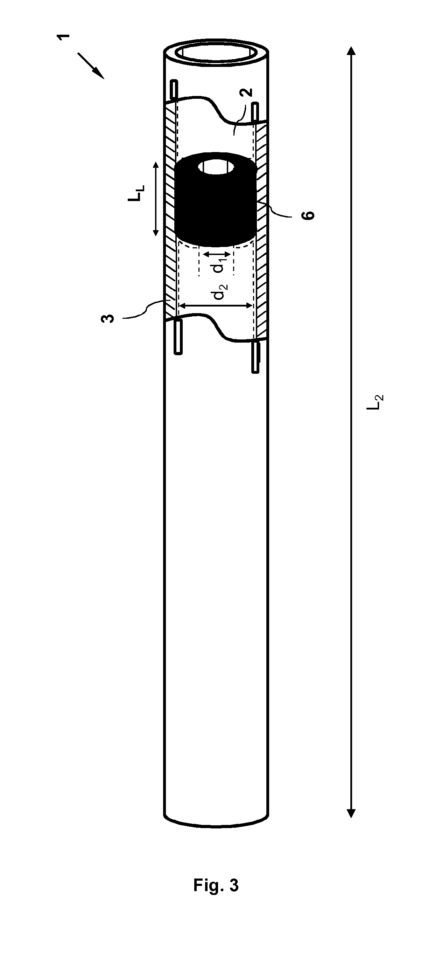

Figure 3 shows a partially transparent schematic of another embodiment example of the water hose 1 in the elongated state. Thereby, the part which is shown partially transparent discloses the inside of the second tube 3, where it is attached to the first tube 2. In the here shown embodiment example, the attachment of the first tube 2 to the second tube 3 is constituted by a cylindrical circumferential limiter 6, which is introduced in between the first tube 2 and the second tube 3. Thereby, the outer diameter of the cylindrical shaped circumferential limiter 6 corresponds to the diameter d₂ to which the first tube 2 is dilated if pressurized, which corresponds to the inner diameter of the second tube 3. The outer surface of the cylindrical circumferential limiter 6 hence contacts the inner surface of the second tube 3 and is attached thereto, for example glued and/or heat welded or attached by other means, such that the cylindrical circumferential limiter 6 can not move relatively to the second tube 3. The first tube 2 extends through an opening in the cylindrical circumferential limiter 6, such that the outer surface of the first tube 2 contacts the inner surface of the cylindrical circumferential limiter 6 defined by the opening. In order to prevent relative motion, the first tube 2 and the cylindrical circumferential limiter 6 are also attached to one another, for example glued or attached by other means. Hence, the cylindrical circumferential limiter 6 is attached to the first tube 2 as well as to the second tube 3, which in turn means the first tube 2 and the second tube 3 are attached at the location of the cylindrical circumferential limiter 6, namely by means of the cylindrical circumferential limiter 6.

The opening in the cylindrical circumferential limiter 6 has a diameter d₁, which corresponds to the diameter to which the first tube 2 has to be restricted to maintain pressure inside the first tube 2, even if water is drained from one end, such that the cylindrical circumferential limiter 6 acts as attachment of the two tubes 2, 3 in the sense of the invention, since it limits the lateral elongation of the first tube 2 to a diameter d₁, which is needed to maintain a pressure inside the first tube 2, even if water is drained from one end - here the upper end. The cylindrical circumferential limiter 6 limits thereby the lateral elongation of the first tube 2 over a length L_{L}, corresponding to the lengthwise extent of the cylindrical circumferential limiter 6 itself, such that a ram pressure is built up inside the remaining first tube 2, when it is connected to a pressurized water source at the one end and water is drained from the other.

The attachment of the first tube 2 to the second tube 3 by means of a cylindrical circumferential limiter 6 hence presents a strong and durable restriction of the lateral elongation of the first tube 2, which in particular is advantageously, when high pressure is applied, since the force which is exerted when the first tube 2 is pressurized is equally distributed at first onto the cylindrical circumferential limiter 6 and then the second tube 3. Further, using an inlaying cylindrical circumferential limiter 6 has the advantage that a homogenous outer surface of the second tube 3 is constituted, which in turn means the water hose 1 does not collect dirt as easy, as it would be the case with an outlaying circumferential limiter 5, as shown in figures 1 and 2.

## Claims

1. A water hose (1), comprising
a first tube (2), made from an elastic material, wherein the first tube (2) is adapted to elongate longitudinal and laterally when pressurized and contract when not pressurized;
a second tube (3), made from a substantially non-elastic but flexible material;
wherein the first tube (2) is located inside the second tube (3) and the first tube (2) is attached to the second tube (3) at the distal ends of the second tube (3);
the first tube (2) and the second tube (3) are attached to one another at at least one further position, wherein the attachment (4) restricts a lateral elongation of the first tube (2) at the attachment (4) to maintain pressure inside the first tube (2).

2. The water hose (1) according to claim 1, wherein one distal end of the first tube (2) is connected to a female or male coupler, adapted for fluidly couple the first tube (2) to a pressurized water source.

3. The water hose (1) according to claim 2, wherein the other distal end of the first tube (2) is connected to a water stopper for retaining the water inside the first tube (2) until the water stopper is released.

4. The water hose (1) according to any of the preceding claims, wherein the elastic material of the first tube (2) is rubber.

5. The water hose (1) according to any of the preceding claims, wherein the non-elastic but flexible material of the second tube (3) is a woven material.

6. The water hose (1) according to any of the preceding claims, wherein the water hose (1) further comprises:
a circumferential limiter (5) at the at least one further position where the first tube (2) is attached to the second tube (3), the circumferential limiter (5) is positioned at the outer surface of the second tube (3) to limit any lateral elongation of the first and/or second tube (2, 3).

7. The water hose (1) according to claim 6, wherein the circumferential limiter (5) is made out of metal.

8. The water hose (1) according to any of claims 6 to 7, wherein the circumferential limiter (5) is glued to the second tube (3).

9. The water hose (1) according to any of the preceding claims, wherein the first tube (2) elongates at least three times its length, when pressurized.

10. The water hose (1) according to any of the preceding claims, wherein the first tube (2) is glued to the second tube (3) at the at least one further position.

11. The water hose (1) according to claim 10, wherein the glue is incompressible, when hardened.

12. The water (1) hose according to any of claims 10 to 11, wherein the glue fills out a space between the first tube (2) and the second tube (3), wherein the space is defined longitudinal by a predefined length and is laterally defined by the difference in diameter (d₁) to which the first tube (2) is limited and the diameter (d₂) of the second tube (3).

13. The water hose (1) according to any of the preceding claims, wherein the attachment (4) of the first tube (2) to the second tube (3) is located at a distance from one of the distal ends, which is less than a quarter of the total length (L₂) of the first tube (2) in the elongated state.

14. The water hose (1) according to any of the preceding claims, wherein the attachment (4) of the first tube (2) to the second tube (3) has a predefined longitudinal extension of at least several centimeters.

15. A method for automatically elongating a water hose (1) comprising a first tube (2), made from an elastic material, wherein the first tube (2) is adapted to elongate longitudinal and laterally when pressurized and contract when not pressurized, a second tube (3), made from a substantially non-elastic but flexible material, wherein the first tube (2) is located inside the second tube (3) and the first tube (2) is attached to the second tube (3) at the distal ends of the second tube (3), wherein the first tube (2) and the second tube (3) are attached to one another at at least one further position, wherein the attachment (4) restricts a lateral elongation of the first tube (2) at the attachment (4) to maintain pressure inside the first tube (2), the method comprising:
connecting one distal end of the first tube (2) to a pressurized water source;
block the other distal end of the first tube (2); and
fill the first tube (2) with water.
